# EUROPEAN PATENT SPECIFICATION

(11) **EP 0 762 995 B1**
(45) Date of publication and mention of the grant of the patent: **27.08.2003**
(21) Application number: 95921034.5
(22) Date of filing: 02.06.1995
(51) Int. Cl.: C01G 3/00

(54) **METAL OXYHALIDE MATERIALS, THEIR USE AND METHODS FOR THEIR PRODUCTION**
METALL OXYHALOGENIDE MATERIALIEN, IHRE VERWENDUNG UND VERFAHREN ZU IHRER HERSTELLUNG
MATERIAUX D'OXYHALOGENURES METALLIQUES, LEUR UTILISATION ET LEURS PROCEDES DE PRODUCTION

(30) Priority: 02.06.1994 GB 9411055
(43) Date of publication of application: 19.03.1997
(73) Proprietor: MERCK PATENT GmbH, 64293 Darmstadt (DE)
(72) Inventor: EDWARDS, Peter, Solihull, West Midlands (GB); GAMESON, Ian, Worcester B60 1JZ (GB); AL-MAMOURI, Malek, Birmingham B29 4EF (GB); HODGES, Jason, Birmingham B45 0LJ (GB); GREAVES, Colin, Birmingham B45 8ND (GB); SLATER, Peter, Raymond, Sutton Coldfield, West Midlands B76 1PA (GB); FRANCESCONI, Maria, Grazia, Birmingham B29 5AG (GB)
(86) International application number: GB9501280
(87) International publication number: WO95033687

(56) References cited:
- EP-A- 0 308 305
- EP-A- 0 513 852
- GB-A- 2 219 998
- US-A- 4 402 924
- US-A- 5 081 103
- DATABASE WPI Derwent Publications Ltd., London, GB; AN 92-196925 & JP,A,04 130 015 (HITACHI) , 1 May 1992

## Description

This invention relates to metal oxyhalides, their use as superconductors and methods for their production.

High pressure sythesis has proved a useful technique for obtaining new, metastable copper oxide superconductors; for example, oxygen insertion into Sr₂CuO₃ at 6 GPa (Hirol, Z. et al. Nature **364,** 315 - 317 (1993)) yields superconducting Sr₂CuO_{3,1}, with a superconducting transition temperature (T_{c}) of 70 K, in which the superconducting CuO₂ layers are generated by pressure induced oxygen migration from apical to equatorial sites. Although the simple structure and high transition temperatures make this family (general formula (Srₙ₊₁CuₙO_{2n+1+δ}) of interest, the stringent synthesis conditions limit its value for applications. Metal oxide superconductors containing fluorine as an electronic dopant are per se known, for example La₂CuO₄Fₓ is disclosed by Tissue, B. et al. in Solid St. Commun. **65**, 51 - 54 (1988), and Nd₂CuO₄₋ₓF_{y} is disclosed by James, A. et al. in Nature **338**, 240 - 241 (1989).

In JP 4-130015 copper oxide superconductive material with layered perovskite crystal structure and containing at least one of F, Cl, Br, and I are described. These compounds show the formula (M_{1-y}A_{y})ₙ₊₁CuₙO_{2n+d}X_{2-d} in which M is at least one of Mg, Ca, Sr, Ba, and Ra, and A is at least one of Li, Na, K, and Ra or vacancy, X is at least one of F, Cl, I, and Br, n is 1 - 3, y is 0 - 5, and d is 0 - 0,6. For the preparation of these products solid powder materials of suitable carbonates, oxides and halides is mixed and heated in O₂ at 500 -900°C for 1 to 100 hours. After that the received product is ground, mixed, moulded and further heated at 500- 900 °C for 1 - 100 hours.

US 5,1081,103 describes a method of incorporating fluorine into the orthorhombic structure of the YBa₂Cu₃O₇₋ₓ system annealing YBa₂Cu₃O₇₋ₓ powder in a fluorine-containing gas, especially NF₂ gas or NF₃/O₂ blend of F₂N₂ blend, at a temperature of at least 250 °C, preferably higher. The operative temperature limits for the NF₃ and NF₃/O₂ treatment are 250- 300 °C, a temperature which allows sufficient reactivity with the fluorine gas while maintaining the system below temperatures at which oxygen incorporation is observed to take place. A treatment using a 10/90 % F₂/N₂ mixture showed no reaction below 500 to 550 °C.

We have discovered a novel class of metal oxyhalide materials in which the halide plays a dominant structural role, rather than merely being an electronic dopant, and which are superconductors with a maximum T_{c} of 46 K.

Thus, according to a first aspect of the present invention , there is provided a new method for the production of halogen-containing copper oxide of the formula Aₙ₊₁CuₙO₂ₙX_{2n+α} where A represents one or more alkaline earth metals, X represents halogen, n is 1 or 2 and 0 < α ≤ 0.6, comprising halogenating a copper oxide of the formula Aₙ₊₁CuₙO₂ₙ₊₁, where A and n are as defined above.

According to a second aspect of the present invention, there is provided a new method for the production of a superconductive material comprising a halogen containing copper oxide of the formula Aₙ₋₁CuₙO₂ₙX_{2n+α} where A, X, n, and α are as defined above. Preferably, α is 0.2 to 0.5.

High pressure methods have allowed the synthesis of metastable phases (such as YBa₂Cu₄O₈ and YSr₂Cu₃O₇) which are difficult, or impossible, to obtain under ambient conditions. A recent observation relates to the oxidation of Sr₂CuO₃, the structure of which can simply be derived from that of La₂CuO₄ by removing chains of oxygen atoms from the CuO₂ layers responsible for superconductivity in doped variants such as (La₁₋ₓSrₓ)₂CuO₄, and La₂CuO₄₊ₓ. At 6 GPa and 800-900°C, Sr₂CuO₃ absorbs small amounts of oxygen and transforms structurally (by oxygen transfer from apical to equatorial positions around Cu) to a metastable superconducting phase Sr₂CuO_{3.1}, T_{c} = 70 K (see Hirol et al, supra), Sr₃Cu₂O_{5+δ}, the next member of this superconductor family, was reported to have T_{c} = 100 K (see Hirol et al, supra). Given that in both superconducting alloys and oxides the highest transition temperatures appear to occur in metastable phases, the development of alternative chemical routes to simulate the thermodynamic effects of high pressures is of fundamental importance. We have found that it is possible to insert elemental fluorine at relatively low temperatures and ambient pressure.

Thus, according to a third aspect of the present invention, there is provided a halogen-containing copper oxide of the formula Aₙ₊₁CuₙO₂ₙX_{2n+α} where A, X, n and α are as defined above. Additionally, there is provided a superconductive material produced according to the claimed method comprising a halogen-containing copper oxide of the formula Aₙ₊₁CuₙO₂ₙX_{2n+α}, where A, X, n and α are as defined above.

Halogenation (most preferably fluorination) may be effected using a gaseous halogenating agent (eg the halogen itself) at a temperature in the range of 100 to 400°C, more preferably 150 to 250°C, and most preferably 180 to 230°C. This fluorination step has the advantage that it can be conducted at ambient pressure.

As an attractive alternative to the use of a halogen, halogenation may be effected in the solid phase using an ammonium halide (preferably ammonium fluoride or ammonium chloride) or in the gaseous or liquid phase using an organoammonium halide (eg an alkylammonium halide such as a tetraalkylammonium halide, for example tetramethyl- or tetraethyl- ammonium fluoride). Such halogenation processes may be used to advantage for the production of halogen-containing metal oxide or metal oxide carbonate superconductors generally.

Thus, according to a fourth aspect of the present invention, there is provided a method of producing a halogen-containing, metal oxide or metal oxide carbonate superconductor comprising introducing a halogen into a metal oxide or metal oxide carbonate using an ammonium halide or an organoammonium halide, eg ammonium fluoride or a tetraalkylammonium fluoride.

In one convenient embodiment, 1 mole of Sr₂CuO₃ is reacted with 2 to 20 moles of NH₄F at 225°C for 10 hours to produce a mixture of SrF₂ and Sr₂CuO₂F_{3+α} with a T_{c} of 46K.

In another convenient embodiment, 1 mole of (Sr_{1.5}Ba_{0.5})CuO₃ is reacted with 2 to 20 moles of NH₄F at 225°C for 10 hours to produce a mixture of (Sr,Ba)F₂ and Sr_{1.5}Ba_{0.5}Cu₂F_{2+α} with a Tc of 60K.

In a further convenient embodiment, the cuprate carbonate (BaₓSr₁₋ₓ)₂CuO₂(CO₃) is fluorinated using NH₄F to produce (BaₓSr₁₋ₓ)₂CuO₂(CO₃)F_{α}, where 0 < x < 1 .

Thus, in a modification the halogen-containing copper oxide according to said first and second aspects of the present invention may also contain carbonate.

Whilst the method according to the fourth aspect of the present invention may be applied to the production of per se known halogen-containing metal oxide superconductors such as La₂CuO₄Fₓ and Nd₂CuO₄₋ₓF_{y} noted above, it is preferably applied to the production of the novel superconductors according to said second aspect of the present invention, possibly modified by the additional presence of carbonate.

The fluorination step in the method according to said third and fourth aspects of the present invention favours production of Aₙ₊₁CuₙO₂ₙX_{2n+0.6}. Most preferably, the material which has been subjected to halogenation is heat-treated in an inert gas atmosphere, eg nitrogen or a mixture of hydrogen and nitrogen, (without the need to use an elevated pressure) to promote loss of halide whereby to decrease the value of α until it is in the range of 0.2 to less than 0.6, preferably in the range of 0.2 to 0.5 in the case where a superconductive, halogen-containing copper oxide according to said second aspect of the present invention is required.

In one embodiment, heat treatment of Sr₂CuO₂F_{2.6} in nitrogen for up to 3 hours at temperatures up to 330°C reduced the α value from 0.6 down to as low as 0.4.

In another embodiment, heat treatment of Sr₂CuO₂F_{2.6} in a 10% hydrogen/nitrogen mixture for 15 minutes at temperatures up to 220°C reduced the α value from 0.6 to between 0.2 and 0.4 inclusive.

The alkaline earth metal represented by A is preferably at least one of magnesium, calcium strontium and barium, more preferably at least one of strontium and barium.

The halide represented by X is preferably fluorine or chlorine, with fluorine being more preferred.

### In the accompanying drawings:-

FIG. 1 shows powder X-ray diffraction patterns (Cu Kα1) of Sr₂CuO₃ before (top) and after (bottom) fluorination. The SrF₂ impurity is marked*
FIG. 2 shows the variation of T_{c} (top) and superconducting fraction (bottom) with copper oxidation state for Sr₂CuO₂F_{2+δ}.
FIG. 3 shows the variation of molar susceptibility of Sr₂CuO₂F_{2.33} with temperature for both field-cooled (FC) and zero field-cooled (ZFC) experiments,
FIG. 4 shows a simplified structure of Sr₂CuO₂F_{2+δ} showing idealized apical (F) and interstitial (F') sites,
FIG. 5 shows the powder X-ray diffraction pattern of fluorinated Sr_{1.5}Ba_{0.5}CuO₂(CO₃), and
FIG. 6 shows the magnetic susceptibility temperature dependence of fluorinated Sr_{1.5}Ba_{0.5}CuO₂(CO₃).

The present invention will now be described in further detail in the following Examples.

### Example 1

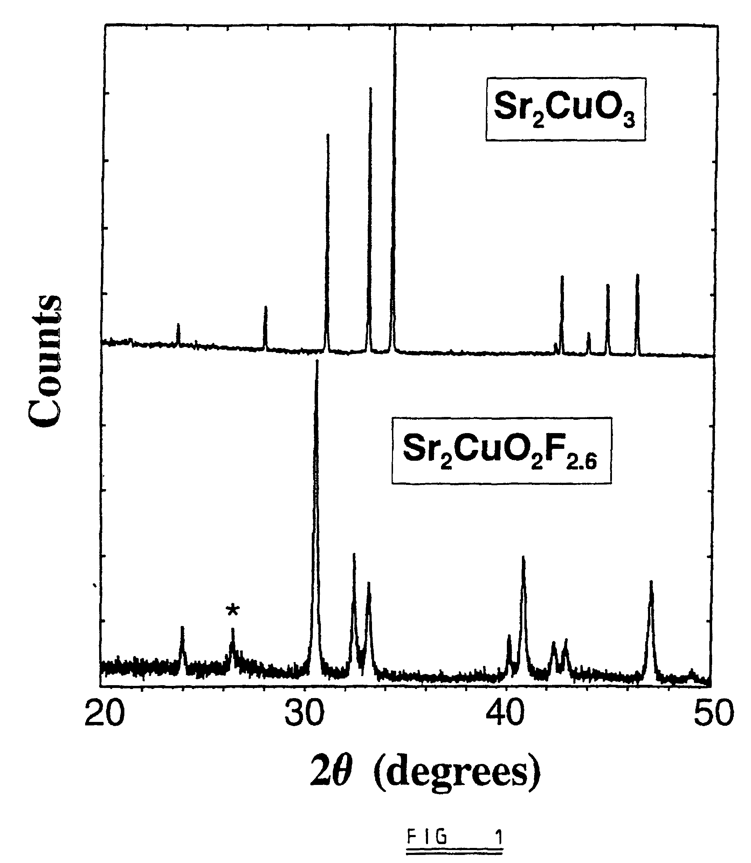

Sr₂CuO₃ (prepared from SrCO₃ and CuO, using two heat treatments at 950°C for 16 h in air) was subjected to thermal treatments in a nickel furnace tube in a mixture of 10% F₂/90% N₂ from which traces of HF have been removed by passing over NaF. Although moderate temperatures (400°C) were found to yield predominantly SrF₂ owing to its high thermodynamic stability, at 210°C this yield of this reaction product was minimised (estimated at ~ 5 - 10% by X-ray diffraction). Upon treatment for 15 min at 210°C, a new orthorhombic (*Fmmm*) phase was formed with unit-cell dimensions implying a close structural relationship to La₄CuO₄: a = 5.394(1), b = 5.513(1), c = 13.468(3) Å (see attached Fig 1).
In one particular treatment, a 200-mg sample of Sr₂CuO₃ in a nickel boat was heated to 210°C in dry N₂ at normal ambient pressure, subjected to a flowing F₂/N₂ atmosphere for 15 min at this temperature, and allowed to cool in N₂ or air after flushing all F₂ from the system. The F content was estimated by precipitation titrations using thorium nitrate solution with methyl thymol blue indicator and comparison with standard solutions containing similar cation concentrations. Thermogravimetric analysis (H₂/N₂ mixture at 930°C to form SrF₂, SrO, Cu) followed by quantitative X-ray diffraction determination of the SrF₂:SrO ratio, provided an independent measure of the F:O ratio in the material; the Cu oxidation state was evaluated by iodometric titration. All results were consistent with the composition Sr₂CuC₂F_{2.6} (formal Cu oxidation state +2.6), which implies significant fluorine substitution for oxygen, in addition to fluorine insertion.

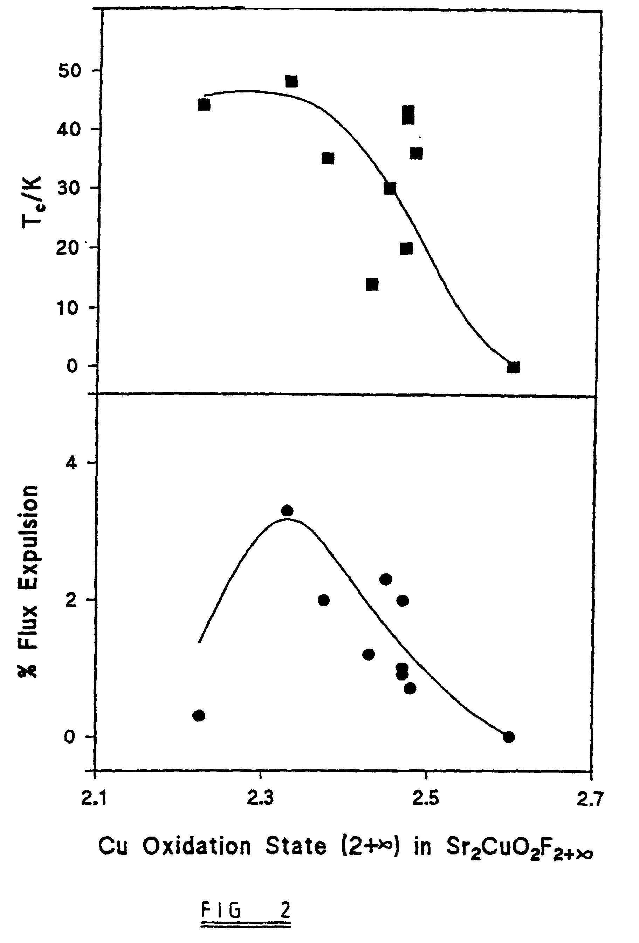

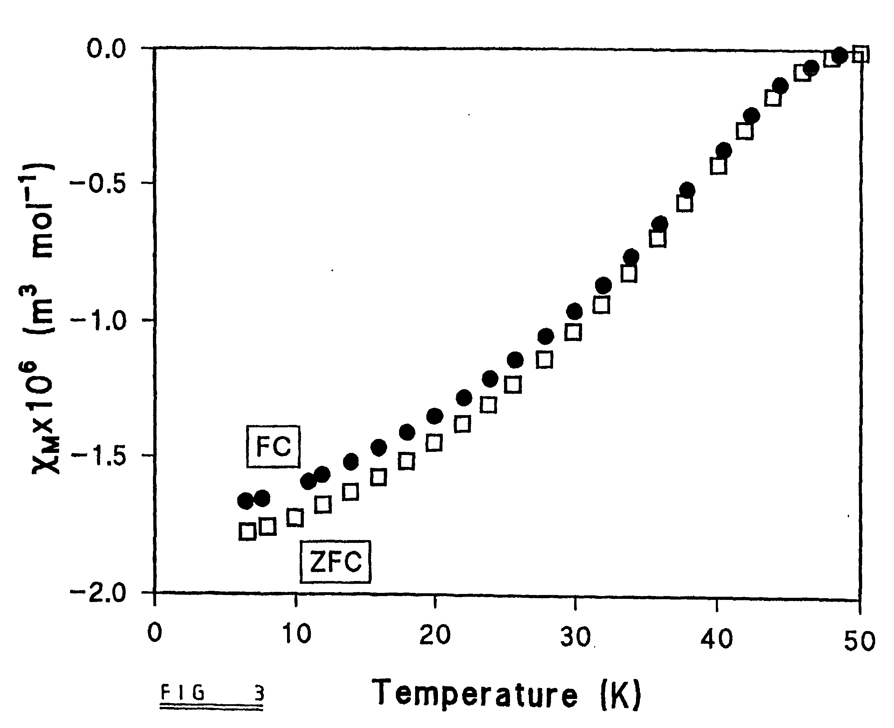

In view of the instability of Sr₂CuO₂F_{2.6} at sintering temperatures, resistance measurements were not attempted and its superconducting properties were examined magnetically with a d.c. SQUID magnetometer, using a field of 10⁻³ T. Some samples were superconducting but with small (< 1%) superconducting volume fractions; low temperature reductions resulted in fluorine loss to give Sr₂CuO₂F_{2+α} with improved superconducting properties. Samples where therefore annealed for up to 3h in N₂ (temperatures up to 330°C, 0.4 ≤ α ≤ 0.6) or for 15 min in a 10% H₂/N₂ mixture ( temperatures up to 220°C, 0.2 ≤ α≤ 0.4). The superconducting properties (T_{c} and percentage flux expulsion) are shown in attached Fig 2 in relation to the Cu oxidation state, and the susceptibility for the sample with T_{c} = 46 K is shown in attached Fig 3. The calculated superconducting volume fractions are small for all samples; this is attributed to particle size effects as it is well established that the magnetization is reduced for powders comprising crystallites with dimensions comparable to the London penetration depth. This interpretation is supported by the broad X-ray diffraction peaks for Sr₂CuO₂F_{2.6} (Fig 1), which indicate a mean crystallite size of only ∼700A, and the small divergence between field-cooled and zero field-cooled susceptibilities (Fig 3). The data in Fig 2 suggests that T_{c} and the superconducting volume fraction may show a broad maximum at a formal Cu oxidation state of +2.2 to +2.3, which is similar to other copper oxide superconductors. The wide range of oxidation states for which superconductivity is observed is thought to reflect composition variations, which are to be expected due to the low temperatures of the synthesis conditions.

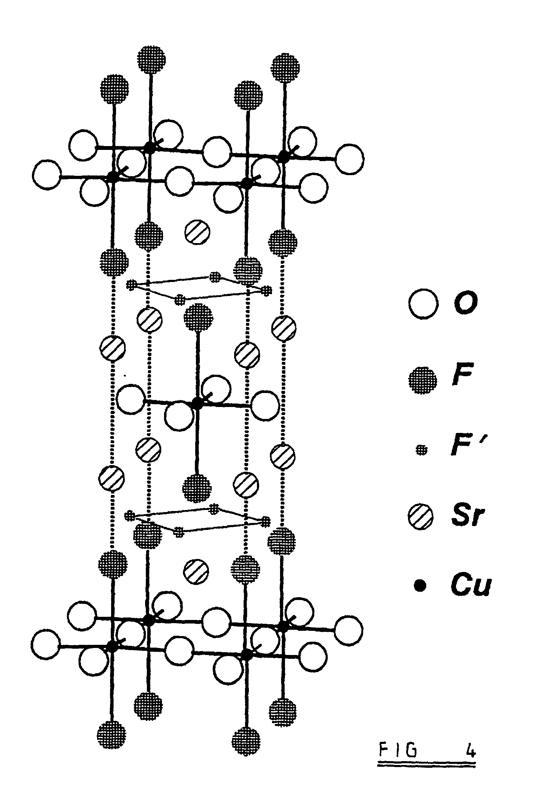

Although neither X-ray nor neutron diffraction can differentiate O and F ions, bulk structural characteristics were investigated using powder neutron diffraction data (collected on a 4-g sample using the POLARIS diffractometer, Isis Rutherford Appleton Laboratory) to aid accurate location of the light atoms. Although structure refinement based on a simple La₂CuO₄ - type model produced an unacceptably high and anisotropic temperature factor for the apical anions (B₁₁ = 6Å², B₂₂ = 23Å², B₃₃ = 0Å²) when considered as a single site, splitting this site into two positions was more satisfactory and resulted in sensible isotropic thermal parameters. This feature is similar to that observed in La₂CuO_{4+δ} ( see Chaillot, C. et al, Physics C**159**, 183 (1989) and Radaell, et al Phys. Rv. B**48**,499 (1993)) and suggests the presence of interstitial F ions, consistent with the formula Sr₂CuO₂F_{2+α}. Inclusion of such ions near the ideal/(¼, /¼, 1¼) position produced a stable refinement, and the results are shown in Table 1 below. The interstitial F (F(3)), which would have four unacceptably short contacts (∼2.15Å) to neighbouring F ions in an undistorted structure, seems to be displaced away from three neighbours towards the fourth, which subsequently shifts by ∼0.6Å to the F(2) site. In this way, four satisfactory F-F distances are achieved (Table 1). Although the defect model is slightly different from those proposed for La₂CuO_{4-δ} , one of which involves a very short O-O distance, it is chemically plausible and avoids all close F-F contacts. In accordance with this model, the F(3) and F(2) occupancies were constrained to be equal in the final refinement, which suggested the composition Sr₂CuO₂F_{2.57}, in excellent agreement with analysis. Bond valence sum calculations suggested a Cu oxidation state of 2.23 (using Cu²⁺ values for r₀ -see Brown, I et al Acta Crystallogr. **B41**, 244-247 (1985)), which is lower than the expected value of +2.6. Madelung energies were calculated for different distributions of O and F atoms in the parent Sr₂CuO₂F₂, and indicated a substantial preference for apical F (11,072 kJmol⁻¹) rather than equatorial F (10,138 kJmol⁻¹) and provided strong support for the presence of only apical F. The structure of Sr₂CuO₂F_{2.6} is shown in simplified form in Fig 4.

The evidence that F avoids the equatorial sites clearly demonstrates the potential role of oxy-fluorides for forming new high temperature copper oxide superconductors; superconductivity in Sr₂CuO₂F₂ has been induced by incorporating interstitial F. The partial replacement of the apical F ions by O²⁻ could provide an alternative means of an ionic chemical control of the electron carrier density, in analogous fashion to Sr and Ba substitutions for La in La₃CuO₄. Of greater significance is the demonstration that the F site preference can promote interchange of O and F ions to create the structural features necessary to support superconductivity in phases which are otherwise unsuited, for example, Sr₂CuO₃.

**TABLE 1**

| Refined structural data for Sr₂CuO₂F_{2.6} | | | | | | |
|---|---|---|---|---|---|---|
| Atom | Position | x | y | z | B(Å²) | Cell occupancy |
| Sr | 8i | 0 | 0 | 0.3680(1) | 0.67(2) | 8 |
| Cu | 4a | 0 | 0 | 0 | 0.66(3) | 4 |
| 0 | 8e | 0.25 | 0.25 | 0 | 0.76(3) | 8 |
| F(1) | 32p | 0.0358(8) | 0.0483(7) | 0.1802(4) | 0.67(7) | 5.72(5) |
| F(2) | 32p | 0.059 | 0.151(2) | 0.1802(4) | 0.67(7) | 2.28(5) |
| F(3) | 32p | 0.196(2) | 0.239(2) | 0.2212(8) | 0.67(7) | 2.28(5) |

Unit cell dimensions a = 5.394(1)Å, b = 5.513(1)Å, c = 13.468(3)Å; space group Fmmm; R factors; R_{wp} = 3.7%, Rₑₓₚ = 1.2%, Rₗ= 7.2%. Bond distances (Å): Cu-O, 1.928(1) [x4]; Cu-F(1), 2.45(1); Cu-O/F(2), 2.59(1); F(3)-F(1); 2..50(3). 2.65(3), 2.56(3); F(3)-F(2), 2.55(3).

### Example 2

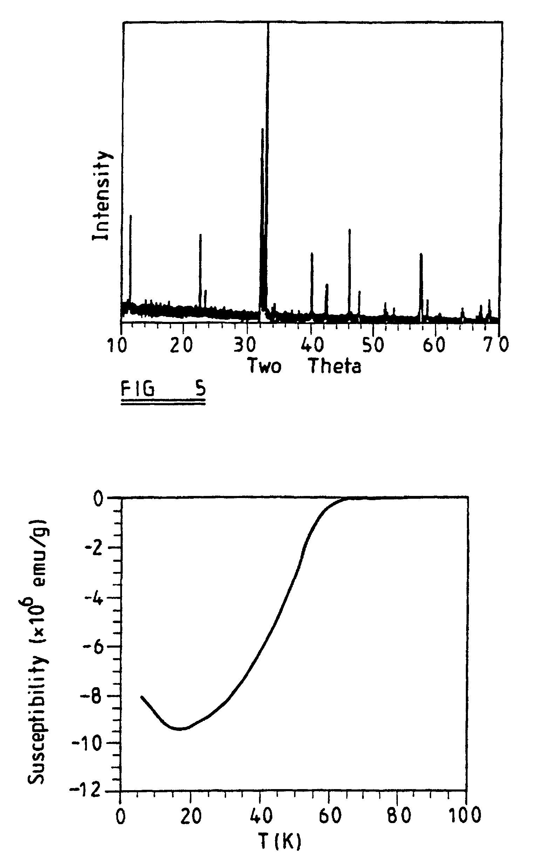

1 mmol of Sr_{1.5}Ba_{0.5}CuO₂(CO₃) (having a (BaₓSr₁₋ₓ)₂CuO₂(CO₃) structure) was intimately ground with 0.5 mmol of NH₄F and the resultant brown coloured mixture was then heated in air for 12 hours at 200°C to produce a black powder. Such black powder was characterised by both X-ray diffraction (PXD) and magnetic susceptibility measurements. PXD confirmed that this new material retained the (BaₓSr₁₋ₓ)₂CuO₂(CO₃) structure, but gave no information as to the location of the fluorine (see Fig. 5). The magnetic susceptibility measurements showed the presence of a superconducting transition at a temperature of about 55 K (see Fig. 6). Although the location of the fluorine has not yet been established, it is possible to envisage that fluorine insertion occurs in the carbonate layer, thus doping the CuO₂ planes. The resulting structure could therefore be described as (BaₓSr₁₋ₓ)₂CuO₂(CO₃)Fα.

## Claims

1. A method of producing a halogen-containing copper oxide of the formula Aₙ₊₁CuₙO₂ₙX_{2n+α} where A represents one or more alkaline earth metals, X represents halogen, n is 1 or 2 and 0 < α ≤ 0.6, comprising the step of halogenating a copper oxide of the formula Aₙ₊₁CuₙC₂ₙ₊₁,
wherein the halogenating step is effected at a temperature in the range of 150 to 250 °C, and if necessary
comprising a heat treatment in an inert gas atmosphere to promote loss of halide whereby to decrease the value of α until it is in the range 0.2 to less than 0.6.

2. A method as claimed in claim 1, wherein the halogenating step is a fluorinating step.

3. A method as claimed in claim 1 or 2, wherein the halogenating step is effected using a gaseous halogenating agent.

4. A method as claimed in claim 3, wherein the halogenating agent is the halogen.

5. A method as claimed in claim 1, 2, 3 or 4, wherein the halogenating step is effected at a temperature in the range of 180 to 230 °C.

6. A method as claimed in any one of claims 1 to 5, wherein the halogenating step is effected at ambient pressure.

7. A method as claimed in claim 1 or 2, wherein the halogenating step is effected in the solid phase using an ammonium halide or in the gaseous or liquid phase using an organoammonium halide.

8. A method of producing a halogen-containing metal oxide or metal oxide carbonate superconductor, comprising the step of introducing a halogen into a metal oxide or metal oxide carbonate at a temperature in the range of 150 to 250 °C, preferably in the range of 180 to 230°C, using an ammonium halide or an organoammonium halide.

9. A method as claimed in claim 8, wherein the ammonium halide is ammonium fluoride.

10. A method as claimed in claim 8, wherein the organoammonium halide is a tetraalkylammonium fluoride.

11. A method as claimed in claim 1 or 8, wherein 1 mole of Sr₂CuO₃ is reacted with 2 to 20 moles of NH₄F at 225 °C for 10 hours to produce a mixture of SrF₂ and Sr₂CuO₂F_{2+α} with a T_{c} of 46 K.

12. A method as claimed in claim 1 or 8, wherein 1 mole of (Sr_{1,5}Ba_{0,5})CuO₃ is reacted with 2 to 20 moles of NH₄F at 225 °C for 10 hours to produce a mixture of (Sr, Ba)F₂ and Sr_{1,5}Ba_{0,5}CuO₂F_{2+α} with a T_{c} of 60 K.

13. A method as claimed in claim 8, wherein the copper oxide carbonate (BaₓSr₁₋ₓ)₂CuO₂(CO₃) is fluorinated using NH₄F to produce (BaₓSr₁₋ₓ)₂CuO₂(CO₃)F_{α}, where 0 < x<1, and 0 < α ≤ 0.6

14. A halogen-containing copper oxide of the formula Aₙ₊₁CuₙO₂ₙX_{2n+α} where A represents one or more alkaline earth metals, X represents halogen, n is 1 or 2 and 0 < α ≤ 0.6 prepared by a method as claimed in claims 1 to 10.

15. A halogen-containing copper oxide as claimed in claim 14, wherein α is 0.2 to 0.5.

16. A superconductive material produced according to a method as claimed in claims 1 to 10 comprising a halogen-containing copper oxide of the formula Aₙ₊₁CuₙO₂ₙX_{2n+α}, where A, X, n and α are as defined in claim 14 or 15.

17. Halogen-containing copper oxide or halogen-containing copper oxide carbonate prepared by a method as claimed in claims 8 to 13.

18. A method as claimed in claim 1 or 8, wherein the material which has been subjected to halogenation is heat-treated in an inert gas atmosphere to promote loss of halide whereby to decrease the value of α until it is in the range of 0.2 to 0.5 in the case where a superconductive, halogen-containing copper oxide according to claim 16.

19. A method as claimed in claim 18, wherein heat treatment of Sr₂CuO₂F_{2.6} is effected in nitrogen for up to 3 hours at temperatures up to 330 °C to reduce the α value from 0.6 down to 0.4.

20. A method as claimed in claim 18, wherein heat treatment of Sr₂CuO₂F_{2.6} is effected in a 10% hydrogen/nitrogen mixture for 15 minutes at temperatures up to 220 °C to reduce the α value from 0.6 to between 0.2 and 0.4 inclusive.

## Patentansprüche

1. Verfahren zur Herstellung eines halogenhaltigen Kupferoxids der Formel Aₙ₊₁CuₙO₂ₙX_{2n+α}, worin A für ein oder mehrere Erdalkalimetalle steht, X für Halogen steht, n gleich 1 oder 2 und 0 < α ≤ 0,6 ist, bei dem man
ein Kupferoxid der Formel Aₙ₊₁CuₙO₂ₙ₊₁ bei einer Temperatur im Bereich von 150 bis 250°C halogeniert
und gegebenenfalls eine Wärmebehandlung in einer Inertgasatmosphäre zur Förderung von Halogenidverlust durchführt und dadurch den Wert von α verringert, bis er im Bereich von 0,2 bis weniger als 0,6 liegt.

2. Verfahren nach Anspruch 1, bei dem es sich bei der Halogenierung um eine Fluorierung handelt.

3. Verfahren nach Anspruch 1 oder 2, bei dem man die Halogenierung mit einem gasförmigen Halogenierungsmittel durchführt.

4. Verfahren nach Anspruch 3, bei dem man als Halogenierungsmittel das Halogen verwendet.

5. Verfahren nach Anspruch 1, 2, 3 oder 4, bei dem man die Halogenierung bei einer Temperatur im Bereich von 180 bis 230°C durchführt.

6. Verfahren nach einem der Ansprüche 1 bis 5, bei dem man die Halogenierung bei Normaldruck durchführt.

7. Verfahren nach Anspruch 1 oder 2, bei dem man die Halogenierung in fester Phase mit einem Ammoniumhalogenid oder in gasförmiger oder flüssiger Phase mit einem Organoammoniumhalogenid durchführt.

8. Verfahren zur Herstellung eines halogenhaltigen Metalloxid- oder Metalloxidcarbonat-Supraleiters, bei dem man bei einer Temperatur im Bereich von 150 bis 250°C, vorzugsweise im Bereich von 180 bis 230°C, unter Verwendung eines Ammoniumhalogenids oder eines Organoammoniumhalogenids in ein Metalloxid oder Metalloxidcarbonat ein Halogen einführt.

9. Verfahren nach Anspruch 8, bei dem man als Ammoniumhalogenid Ammoniumfluorid verwendet.

10. Verfahren nach Anspruch 8, bei dem man als Organoammoniumhalogenid Tetraalkylammoniumfluorid verwendet.

11. Verfahren nach Anspruch 1 oder 8, bei dem man 1 mol Sr₂CuO₃ mit 2 bis 20 mol NH₄F bei 225°C über einen Zeitraum von 10 Stunden zu einer Mischung von SrF₂ und Sr₂CuO₂F_{2+α} mit einer T_{c} von 46 K umsetzt.

12. Verfahren nach Anspruch 1 oder 8, bei dem man 1 mol (Sr_{1,5}Ba_{0,5})CuO₃ mit 2 bis 20 mol NH₄F bei 225°C über einen Zeitraum von 10 Stunden zu einer Mischung von (Sr,Ba)F₂ und Sr_{1,5}Ba_{0,5}CuO₂F_{2+α} mit einer T_{c} von 60 K umsetzt.

13. Verfahren nach Anspruch 8, bei dem man das Kupferoxidcarbonat (BaₓSr₁₋ₓ)₂CuO₂(CO₃) mit NH₄F fluoriert, wobei man (BaₓSr₁₋ₓ)₂CuO₂(CO₃)F_{α} mit 0 < x < 1 und 0 < α ≤ 0,6 erhält.

14. Halogenhaltiges Kupferoxid der Formel Aₙ₊₁CuₙO₂ₙX_{2n+α}, worin A für ein oder mehrere Erdalkalimetalle steht, X für Halogen steht, n gleich 1 oder 2 und 0 < α ≤ 0,6 ist, das nach einem Verfahren nach einem der Ansprüche 1 bis 10 hergestellt worden ist.

15. Halogenhaltiges Kupferoxid nach Anspruch 14, worin α einen Wert von 0,2 bis 0,5 aufweist.

16. Supraleitendes Material, das nach einem Verfahren nach einem der Ansprüche 1 bis 10 hergestellt worden ist und ein halogenhaltiges Kupferoxid der Formel Aₙ₊₁CuₙO₂ₙX_{2n+α}, worin A, X, n und α die in Anspruch 14 oder 15 angegebene Bedeutung haben, enthält.

17. Halogenhaltiges Kupferoxid oder halogenhaltiges Kupferoxidcarbonat, das nach einem Verfahren nach einem der Ansprüche 8 bis 13 hergestellt worden ist.

18. Verfahren nach Anspruch 1 oder 8, bei dem man in dem Fall, daß ein supraleitendes, halogenhaltiges Kupferoxid nach Anspruch 16 gefordert ist, das der Halogenierung unterworfene Material in einer Inertgasatmosphäre zur Förderung von Halogenidverlust wärmebehandelt und dadurch den Wert von α verringert, bis er im Bereich von 0,2 bis 0,5 liegt.

19. Verfahren nach Anspruch 18, bei dem man Sr₂CuO₂F_{2,6} in Stickstoff über einen Zeitraum von bis zu 3 Stunden bei Temperaturen bis zu 330°C wärmebehandelt und dadurch den α-Wert von 0,6 auf 0,4 verringert.

20. Verfahren nach Anspruch 18, bei dem man Sr₂CuO₂F_{2,6} in einem Gemisch aus 10% Wasserstoff und Stickstoff über einen Zeitraum von 15 Minuten bei Temperaturen bis zu 220°C wärmebehandelt und dadurch den α-Wert von 0,6 auf einen Wert zwischen 0,2 und 0,4 inklusive verringert.

## Revendications

1. Procédé de production d'un oxyde de cuivre contenant de l'halogène de formule Aₙ₊₁ Cuₙ O₂ₙ X_{2n + α}, dans laquelle A représente un ou plusieurs métaux alcalino-terreux, X représente de l'halogène, n est 1 ou 2 et 0 < α ≤ 0,6, comprenant l'étape consistant à halogéner un oxyde de cuivre de formule Aₙ₊₁ Cuₙ O₂ₙ₊₁, dans lequel l'étape d'halogénation est effectuée à une température comprise dans la gamme allant de 150 à 250°C, et si nécessaire, comprenant un traitement thermique dans une atmosphère de gaz inerte afin de promouvoir la perte d'halogénure et ainsi abaisser la valeur de α jusqu'à ce que celle-ci soit dans la gamme allant de 0,2 à moins de 0,6.

2. Procédé selon la revendication 1, dans lequel l'étape d'halogénation est une étape de fluoration.

3. Procédé selon la revendication 1 ou 2, dans laquelle l'étape d'halogénation est effectuée en utilisant un agent halogénant gazeux.

4. Procédé selon la revendication 3, dans lequel l'agent halogénant est l'halogène.

5. Procédé selon la revendication 1, 2, 3 ou 4, dans lequel l'étape d'halogénation est effectuée à une température comprise dans la gamme allant de 180 à 230°C.

6. Procédé selon l'une quelconque des revendications 1 à 5, dans lequel l'étape d'halogénation est effectuée à la pression ambiante.

7. Procédé selon la revendication 1 ou 2, dans lequel l'étape d'halogénation est effectuée en phase solide en utilisant un halogénure d'aluminium, ou en phase liquide ou gazeuse en utilisant un halogénure d'organoammonium.

8. Procédé de production d'un oxyde métallique contenant de l'halogène ou d'un supraconducteur carbonate d'oxyde métallique, comprenant l'étape consistant à introduire un halogène dans un oxyde métallique ou un carbonate d'oxyde métallique à une température comprise dans la gamme allant de 150 à 250°C, de préférence dans la gamme allant de 180 à 230°C, en utilisant un halogénure d'ammonium ou un halogénure d'organoammonium.

9. Procédé selon la revendication 8, dans lequel l'halogénure d'ammonium est du fluorure d'ammonium.

10. Procédé selon la revendication 8, dans lequel l'halogénure d'organoammonium est du fluorure de tétraalkylammonium.

11. Procédé selon la revendication 1 ou 8, dans lequel 1 mole de Sr₂CuO₃ est mise à réagir avec de 2 à 20 moles de NH₄F à 225°C pendant 10 heures afin de produire un mélange de SrF₂ et Sr₂CuO₂F_{2+α} avec une valeur Tc de 46 K.

12. Procédé selon la revendication 1 ou 8, dans lequel une mole de (Sr_{1,5}Ba_{0,5})CuO₃ est mise à réagir avec de 2 à 20 moles de NH₄F à 225°C pendant 10 heures pour produire un mélange de (Sr, Ba)F₂ et Sr_{1,5}Ba_{0,5}CuO₂F_{2+α}, avec une valeur Tc de 60 K.

13. Procédé selon la revendication 8, dans lequel le carbonate d'oxyde de cuivre (BaₓSr₁₋ₓ)₂CuO₂(CO₃) est fluoré en utilisant du NH₄F pour produire (BaₓSr₁₋ₓ)₂CuO₂(CO₃)F_{α}, dans lequel 0 < x < 1 et 0 < α ≤ 0,6.

14. Oxyde de cuivre contenant de l'halogène de formule Aₙ₊₁CuₙO₂ₙX_{2n+α}, dans laquelle A représente un ou plusieurs métaux alcalino-terreux, X représente l'halogène, n est 1 ou 2 et 0 < α ≤ 0,6, préparé par un procédé selon les revendications 1 à 10.

15. Oxyde de cuivre contenant de l'halogène selon la revendication 14, dans lequel a est 0,2 à 0,5.

16. Matériau supraconducteur produit par un procédé selon les revendications 1 à 10, comprenant un oxyde de cuivre contenant de l'halogène de formule Aₙ₊₁CuₙO₂ₙX_{2n+α}, dans laquelle A, X, n et α sont comme défini dans la revendication 14 ou 15.

17. Oxyde de cuivre contenant de l'halogène ou carbonate d'oxyde de cuivre contenant de l'halogène préparé par un procédé selon les revendications 8 à 13.

18. Procédé selon la revendication 1 ou 8, dans lequel le matériau qui a été soumis à l'halogénation est traité thermiquement dans une atmosphère de gaz inerte afin de promouvoir la perte d'halogénure, et ainsi abaisser la valeur de a jusqu'à ce que celle-ci soit dans la gamme allant de 0,2 à 0,5 dans le cas d'un oxyde de cuivre contenant de l'halogène supraconducteur selon la revendication 16.

19. Procédé selon la revendication 18, dans lequel le traitement thermique de Sr₂CuO₂F_{2,6} est effectué dans de l'azote pendant jusqu'à 3 heures à des températures allant jusqu'à 330°C afin d'abaisser la valeur de α de 0,6 jusqu'à 0,4.

20. Procédé selon la revendication 18, dans lequel le traitement thermique de Sr₂CuO₂F_{2,6} est effectué dans un mélange d'hydrogène à 10% d'azote pendant 15 minutes à des températures allant jusqu'à 220°C afin de réduire la valeur de α de 0,6 à entre 0,2 et 0,4 inclus.
